# EUROPÄISCHE PATENTANMELDUNG

(11) **EP 2 279 894 A2**
(43) Veröffentlichungstag der Anmeldung: **02.02.2011**
(21) Anmeldenummer: 10007486.3
(22) Anmeldetag: 20.07.2010
(51) Int. Cl.: B60L 11/18

(54) **Lade-Steckdose zur Aufladung eines Elektroautos, mit Mitteln zur Einbindung in die Gebäudeautomaten**

(30) Priorität: 01.08.2009 DE 102009035826
(71) Anmelder: ABB AG, 68309 Mannheim (DE)
(72) Erfinder: Lange, Manfred, Dipl.-Ing., 44229 Dortmund (DE); Wilms, Benjamin, Dipl.-Ing., 58802 Balve (DE)

(57) **Zusammenfassung**

Es wird eine Lade-Steckdose (1, 2, 3) zur Aufladung eines Elektroautos über ein zwischen Eingangs-Anschlussklemmen (10) der Lade-Steckdose und einer elektrischen Kupplung (35) des aufzuladenden Fahrzeugs (34) verlaufendes Lade-Kabel (32, 49, 53) vorgeschlagen, mit Mitteln zur Einbindung der Lade-Steckdose in die Gebäudeautomation, wobei diese Mittel einen Busankoppler (14) bei Verwendung eines Installationsbusses (18) oder für den Zugang zu einer Informationstechnik (IT) Infrastruktur respektive einen Netzankoppler (13) bei Verwendung der Powerline-Technik umfassen.

## Beschreibung

### Beschreibung

Die Erfindung betrifft eine Lade-Steckdose zur Aufladung eines Elektroautos, mit Mitteln zur Einbindung in die Gebäudeautomation.

Führende Autohersteller und Energiekonzerne haben sich auf einen gemeinsamen Fahrzeug-Steckverbinder für Elektroautos mit hierzu korrespondierender elektrischer Kupplung geeinigt (Industrie-Standard), mit dem Fahrzeugbesitzer weltweit die Akkumulatoren ihrer Elektroautos aufladen können.

Der Erfindung liegt die Aufgabe zugrunde, eine Lade-Steckdose zur Aufladung eines Elektroautos mit erweiterten Anwendungsmöglichkeiten anzugeben.

Diese Aufgabe wird erfindungsgemäß gelöst durch eine Lade-Steckdose zur Aufladung eines Elektroautos über ein zwischen Eingangs-Anschlussklemmen der Lade-Steckdose und einer elektrischen Kupplung des aufzuladenden Fahrzeugs verlaufendes Lade-Kabel, mit Mitteln zur Einbindung der Lade-Steckdose in die Gebäudeautomation, wobei diese Mittel einen Busankoppler bei Verwendung eines Installationsbusses oder für den Zugang zu einer Informationstechnik (IT) Infrastruktur respektive einen Netzankoppler bei Verwendung der Powerline-Technik umfassen.

Die mit der Erfindung erzielbaren Vorteile bestehen insbesondere darin, dass die Lade-Steckdose zu einem vollwertigen Busteilnehmer einer Gebäudeautomation mit all den damit verbundenen Möglichkeiten wird. Der Aufladeprozess kann kosteneffizient unter Einbeziehung von aktuellen, z. B. per Internet zugänglichen Informationen gestaltet werden. Des Weiteren können innerhalb der Gebäudeautomation zugängliche, abgespeicherte Dateien, wie z. B. MP3-Dateien, über die Lade-Streckdose zum Fahrzeug übertragen werden. Es ist eine unmittelbare Kommunikation mit allen anderen Busteilnehmern der Gebäudeautomation, eine zentrale Ansteuerung gewünschter Aufladevorgänge und eine zentrale Anzeige gewünschter Größen, wie z. B. Verbrauchdaten des aufgeladenen Fahrzeuges und voraussichtliches und / oder tatsächliches Ende des Aufladeprozesses möglich.

Zweckmäßige Ausgestaltungen der Erfindung sind in den Unteransprüchen gekennzeichnet.

So kann Ethernet als kabelgebundene Datennetztechnik für ein lokales Datennetz eingesetzt werden. Die Lade-Steckdose kann einen Funk-Busankoppler mit einer zugeordneten Antenne für die drahtlose Kommunikation mit einer dem Installationsbus zugeordneten Funkeinheit aufweisen. Es kann ein WLAN Funk-Busankoppler eingesetzt werden.

Bei der Lade-Steckdose kann eine Auswerte-/Verarbeitungseinheit vorgesehen sein, welche zusammen mit einer dem Fahrzeug zugeordneten Auswerte-/Verarbeitungseinheit eines Fahrzeug-Rechners eine Daten-Kommunikation zwischen Lade-Steckdose und Fahrzeug durch Signalwandlung der kommunizierten Daten ermöglicht. Diese Auswerte-/Verarbeitungseinheit kann mit dem Steuereingang eines zwischen den Eingangs-Anschlussklemmen und einen elektrischen Ausgangs-Anschluss der Lade-Steckdose eingebundenen Schaltgliedes verbunden sein.

Der elektrische Ausgangs-Anschluss kann in Form eines Steckdosen-Gerätesockels zum Einführen eines Steckverbinders eines Ladekabels ausgebildet sein, wodurch eine Unterputz-Ausführung der Lade-Steckdose realisierbar ist.

Alternativ kann der elektrische Ausgangs-Anschluss in Form eines innerhalb des Gehäuses der Lade-Steckdose befindlichen und bedarfsweise aus dem Gehäuse herausziehbaren Lade-Kabels inklusive endseitigem Steckverbinder ausgebildet sein. Dabei ergibt sich als erste Möglichkeit, eine automatische Kabelaufwicklung des Lade-Kabels im Gehäuse der Lade-Steckdose vorzusehen und als zweite Möglichkeit, ein Spiralkabel als Lade-Kabel einzusetzen.

Die Erfindung wird nachstehend an Hand der in der Zeichnung dargestellten Ausführungsbeispiele näher erläutert. Es zeigen:
- Fig. 1: eine schematische Darstellung einer Lade-Steckdose in Unterputz- Ausführung mit einem daran angeschlossenen Fahrzeug (Elektroauto) mit einer mit einem Installationsbus umgesetzten Kommunikation zwischen der Haus- und Gebäudesystemtechnik und der Lade-Steckdose respekti- ve dem Fahrzeug,
- Fig. 2: eine schematische Darstellung einer Lade-Steckdose in Unterputz- Ausführung mit einem daran angeschlossenen Fahrzeug mit einer mit Powerline-Technik umgesetzten Kommunikation zwischen der Haus- und Gebäudesystemtechnik und der Lade-Steckdose respektive dem Fahr- zeug,
- Fig. 3: eine schematische Darstellung einer Lade-Steckdose in Unterputz- Ausführung mit einem daran angeschlossenen Fahrzeug mit einer via Funk umgesetzten Kommunikation zwischen der Haus- und Gebäudesys- temtechnik und der Lade-Steckdose respektive dem Fahrzeug,
- Fig. 4: eine Sicht auf die Frontseite einer mit einer Anzeige-/Eingabeeinheit kombinierten Lade-Steckdose in Unterputz-Ausführung,
- Fig. 5: eine alternative Ausführungsform zu den Figuren 1, 2 und 3 unter Ver- wendung einer eine Kabelaufwicklung aufweisenden Lade-Steckdose für Wand- oder Bodenbefestigung,
- Fig. 6: eine alternative Ausführungsform zu den Figuren 1, 2 und 3 unter Ver- wendung einer ein Spiralkabel aufweisenden Lade-Steckdose für Wand- oder Bodenbefestigung.

Die vorgeschlagene Lade-Steckdose eignet sich sowohl für eine Unterputz-Ausführung, als auch für Wandbefestigung, Pfostenbefestigung und Bodenbefestigung. Wesentlich sind dabei die Mittel, welche eine Daten-Kommunikation zwischen der Lade-Steckdose und der Gebäudeautomation (Haus- und Gebäudesystemtechnik) ermöglichen, wobei alternativ entweder ein eigener Installationsbus, vorzugsweise gemäß KNX-Standard, oder die Powerline-Technik, vorzugsweise gemäß KNX-Standard, zum Einsatz gelangen können. Nachfolgend werden die einzelnen Ausführungsformen näher beschrieben.

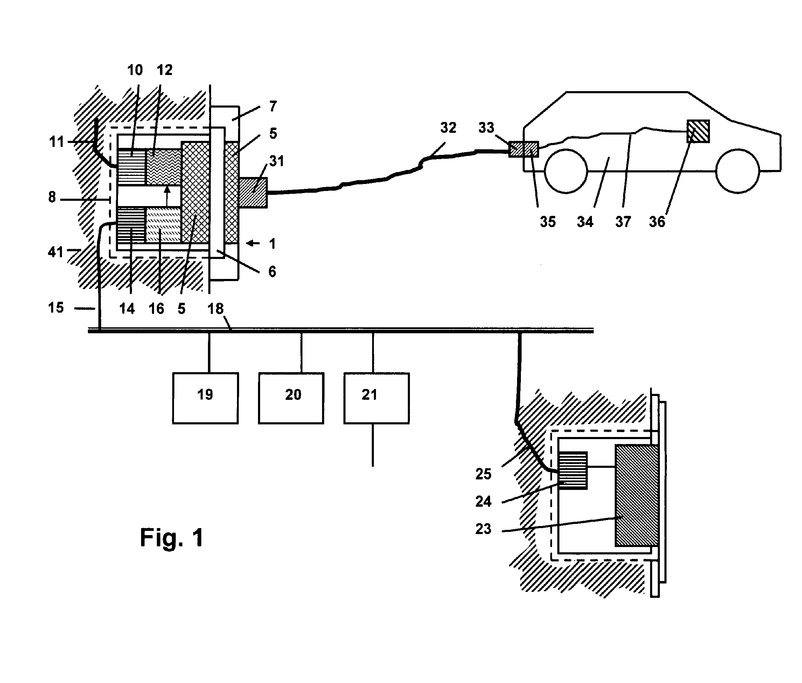

In Fig. 1 ist eine schematische Darstellung einer Lade-Steckdose in Unterputz-Ausführung mit einem daran angeschlossenen Fahrzeug mit einer mit einem Installationsbus umgesetzten Kommunikation zwischen der Haus- und Gebäudesystemtechnik und der Lade-Steckdose respektive dem Fahrzeug dargestellt. Es ist eine Wand 41 (z. B. Wand einer Garage oder eines Carports) mit einer darin montierten Unterputzdose 8 (handelsübliche UP-Gerätedose aus Kunststoff mit 60 mm Durchmesser) zu erkennen, in welcher eine Lade-Steckdose 1 in Unterputz-Ausführung installiert ist, welche einen Steckdosen-Gerätesockel 5 (elektrischer Ausgangs-Anschluss) mit elektrischen Kontakten für den Anschluss eines ersten Fahrzeug-Steckverbinders 31 eines Lade-Kabels 32, Eingangs-Anschlussklemmen 10, ein Schaltglied 12 mit Steuereingang, einen Busankoppler 14 und eine Auswerte-/Verarbeitungseinheit 16 aufweist.

Die Eingangs-Anschlussklemmen 10 stellen die Verbindung mit einem Anschlusskabel 11 her, über welches die elektrische Leistung zum Aufladen der Akkumulatoren eines Fahrzeuges zur Verfügung gestellt wird. Zum Aufladen eines Fahrzeuges 34 wird das Lade-Kabel 32 mit seinem ersten Fahrzeug-Steckverbinder 31 in den Steckdosen-Gerätesockel 5 und mit seinem zweiten Fahrzeug-Steckverbinder 33 in eine am Fahrzeug 34 befestigte, korrespondierend hierzu ausgebildete elektrische Kupplung 35 eingesteckt.

Beim Fahrzeug-Steckverbinder 33 und der korrespondierenden elektrischen Kupplung 35 handelt es sich vorteilhaft um standardisierte Komponenten (Industrie-Standard), wodurch es ermöglicht wird, dass die Akkumulatoren eines Fahrzeugs (Elektroautos) in schneller Art und Weise aufgeladen werden können, ohne dass dabei Adapter eingesetzt werden müssten. Die Ladespannung liegt im Bereich 400 V (vorzugsweise Dreiphasenwechselstrom) und die Stromstärke kann bis 63 A betragen.

An die elektrische Kupplung sind die Akkumulatoren des Fahrzeuges über einen Gleichrichter angeschlossen. Die Aufladung der Akkumulatoren selbst erfolgt vorzugsweise in geregelter Art und Weise über eine entsprechende Lade-Steuer-/Regelvorrichtung, welche in Form eines separaten Gerätes ausgebildet oder Teilkomponente eines Fahrzeug-Rechners sein kann. Werden z. B. Lithium-lonen Akkumulatoren verwendet, so wird zunächst mit konstantem Anfangsstrom geladen. Erreicht der Akkumulator eine definierte Zellenspannung, so wird dieser Strom gehalten, bis der Ladestrom fast gegen Null zurückgefallen ist. Die Ladung wird beendet, wenn der Ladestrom einen definierten, sehr geringen Wert des Anfangsstroms erreicht bzw. nicht mehr weiter absinkt. Dementsprechend können Kennlinien offline erstellt und in der Lade-Steuer-/Regelvorrichtung respektive im Fahrzeug-Rechner abgespeichert werden. An Hand dieser Kennlinien und der aktuell erfassen Spannungs- und Stromwerte lassen sich während des Aufladeprozesses der aktuelle Ladestatus der Akkumulatoren, die Rest-Ladezeit und der Zeitpunkt des voraussichtlichen Lade-Endes berechnen. Selbstverständlich lässt sich an Hand der während es Aufladeprozesses erfassten Strom- und Spannungswerte für Verrechnungszwecke auch die für die Aufladung erforderlich gewordene Leistung berechnen.

Das Schaltglied 12 ist elektrisch zwischen den Eingangs-Anschlussklemmen 10 und den elektrischen Kontakten des Steckdosen-Gerätesockels 5 eingebunden und wird über seinen Steuereingang von der Auswerte-/Verarbeitungseinheit 16 angesteuert, welche ihrerseits unmittelbar mit dem über ein Kabel 15 an einen vorzugsweise dem KNX-Standard entsprechenden Installationsbus 18 eines Gebäudeautomationssystems (Haus- und Gebäudesystemtechnik) angeschlossenen Busankoppler 14 sowie mit den elektrischen Kontakten des Steckdosen-Gerätesockel 5 verbunden ist.

Die Lade-Steckdose 1 weist eine Zentralscheibe 6 und einen Abdeckrahmen 7 auf, so dass eine formschöne Einbindung / Integration in ein Installationsgeräte-Programm respektive Schalter- und Steckdosenprogramm sowie eine Kombination mit weiteren Geräten, beispielsweise Schaltern / Tastern / Dimmern / Steckdosen dieses Schalter- und Steckdosenprogramms möglich ist.

Das für die Daten-Kommunikation ausgestattete Fahrzeug 34 besitzt einen Fahrzeug-Rechner 36, welcher über ein Kabel 37 elektrisch an die Kupplung 35 angeschlossen ist und neben weiteren Komponenten eine Anzeigeeinheit, eine Eingabeeinheit und eine Auswerte-/Verarbeitungseinheit besitzt,
- wodurch die über das Lade-Kabel empfangenen Daten ausgewertet und angezeigt werden können und / oder
- wodurch die über das Lade-Kabel an die Lade-Steckdose zu sendenden Daten übertragen werden können.

Der Installationsbus 18 kann wie allgemein üblich an einen Zentralrechner 19 und an einen Zentralspeicher 20 angeschlossen sein und besitzt optional eine Internet-Schnittstelle 21. Ferner ist eine vorzugsweise in Unterputz-Ausführung ausgebildete Anzeige-/Eingabeeinheit 23 (Controlpanel) über ein Kabel 25 und einen Busankoppler 24 am Installationsbus 18 angeschlossen.

Über den Busankoppler 14, die Auswerte-/Verarbeitungseinheit 16, die elektrischen Kontakte des Steckdosen-Gerätesockel 5, das Lade-Kabel 32 und die Kupplung 35 wird eine Kommunikation zwischen der Anzeige-/Eingabeeinheit 23, den Installationsbus 18 und der Lade-Steckdose 1 respektive dem daran angeschlossenen Fahrzeug 34 ermöglicht.

Die Signalumsetzung, die Abspeicherung gewünschter / ermittelter Signalfolgen, die Wandelung von Daten, wie Ansteuerbefehlen und Meldesignalen, in entsprechende Leistungssignale und gegebenenfalls eine Verschlüsselung (Codierung / Decodierung) erfolgt jeweils in den Auswerte-/Verarbeitungseinheiten der Lade-Steckdose und des Fahrzeuges (dem Fahrzeug-Rechner zugeordnet respektive dort impliziert). Dabei kann die Datenübertragung über das Lade-Kabel z. B. durch Modulation einer oder mehrerer Trägerfrequenzen erfolgen (Trägerfrequenz-Datenübertragung über eine elektrische Leitung), d. h. die Auswerte-/Verarbeitungseinheiten enthalten derartige für die Daten-Kommunikation geeignete Modulations-/Demodulations-Einrichtungen.

Dabei können Mittel vorgesehen sein, welche eine Kommunikation zwischen Fahrzeug 34 und Anzeige-/Eingabeeinheit 23 und umgekehrt erst dann freigegeben, nachdem sich das Fahrzeug über diese Kommunikation eindeutig identifiziert hat. Zweckmäßig wird eine derartige Identifizierung in der Anzeige-/Eingabeeinheit 23 zur Anzeige gebracht.

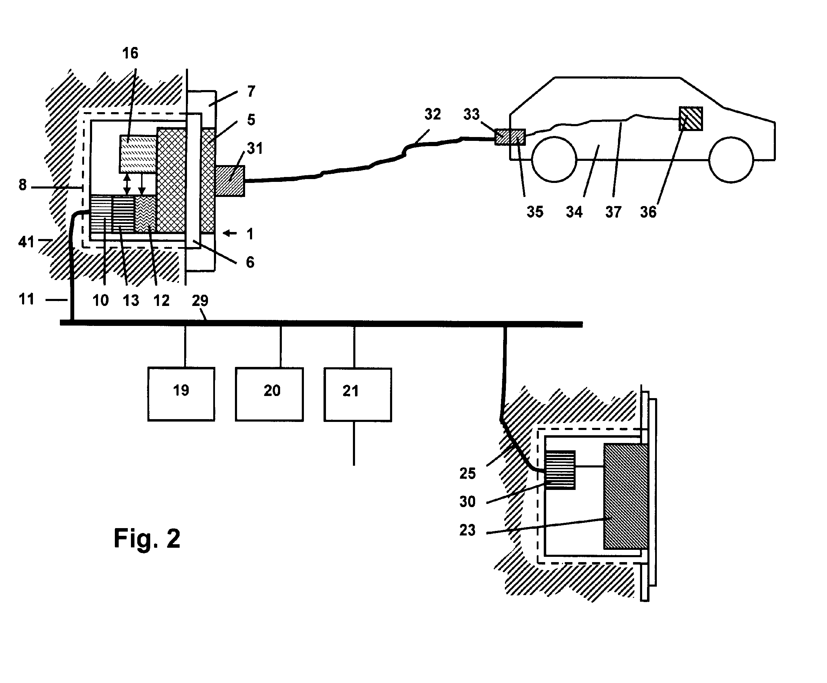

In Fig. 2 ist eine schematische Darstellung einer Lade-Steckdose in Unterputz-Ausführung mit einem daran angeschlossenen Fahrzeug mit einer mit Powerline-Technik umgesetzten Kommunikation zwischen der Haus- und Gebäudesystemtechnik und der Lade-Steckdose respektive dem Fahrzeug dargestellt. Unter dem Begriff "Powerline-Technik" wird in diesem Zusammenhang allgemein die Datenübertragung über das Stromversorgungsnetz (Niederspannungsnetz) eines Gebäudes verstanden, wobei vorzugsweise dem KNX-Standard entsprochen wird. Bei dieser Ausführungsform ist zusätzlich zur Ausführungsform gemäß Fig. 1 ein Netzankoppler (Leistungs/Daten-Trennbaustein) 13 zwischen den Eingangs-Anschlussklemmen 10 und dem mit den elektrischen Kontakten des Steckdosen-Gerätesockels 5 verbundenen Schaltglied 12 vorgesehen. Das Anschlusskabel 11 ist an Powerline-Technik 29 eines Gebäudeautomationssystems angeschlossen, d. h. Leistungsfluss und Kommunikation erfolgen über dieselbe Leitung. Der Busankoppler 14 inklusive Kabel 15 entfallen dementsprechend.

Die mit den elektrischen Kontakten des Steckdosen-Gerätesockels 5 verbundene, das Schaltglied 12 über dessen Steuereingang ansteuernde Ansteuereinheit 16 kommuniziert bidirektional mit dem Netzankoppler 13. Der Anschluss der Anzeige-/Eingabeeinheit 23 erfolgt über einen Netzankoppler 30 (Leistungs/Daten-Trennbaustein) an Stelle des Busankopplers 24 gemäß Fig. 1. Die übrige Konfiguration entspricht der Ausführungsform gemäß Fig. 1.

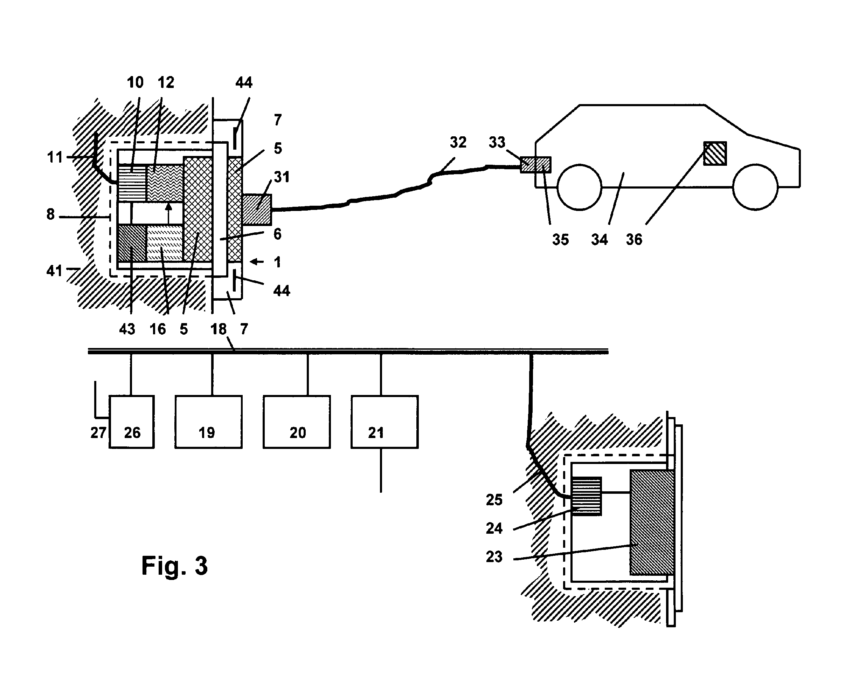

In Fig. 3 ist eine schematische Darstellung einer Lade-Steckdose in Unterputz-Ausführung mit einem daran angeschlossenen Fahrzeug mit einer via Funk umgesetzten Kommunikation zwischen der Haus- und Gebäudesystemtechnik und der Lade-Steckdose respektive dem Fahrzeug dargestellt. Bei dieser Ausführungsform ist zusätzlich zur Ausführungsform gemäß Fig. 1 eine Funkeinheit 26 mit zugeordneter Antenne 27 am Installationsbus 18 angeschlossen und der Busankoppler 14 gemäß Fig. 1 ist durch einen Funk-Busankoppler 43 inklusive zugeordneter Antenne 44 ersetzt, wobei die Versorgung des Funk-Busankopplers 43 über die Eingangs-Anschlussklemmen 10 erfolgt. Dementsprechend entfällt das Kabel 15. Die Antenne 44 kann in der Zentralscheibe 6 oder im Abdeckrahmen 7 integriert sein. Der Funk-Busankoppler 43 ist unmittelbar mit der Auswerte-/Verarbeitungseinheit 16 verbunden. Die Funkübertragung kann z. B. über WLAN (Wireless Local Area Network) erfolgen. Die übrige Konfiguration entspricht der Ausführungsform gemäß Fig. 1.

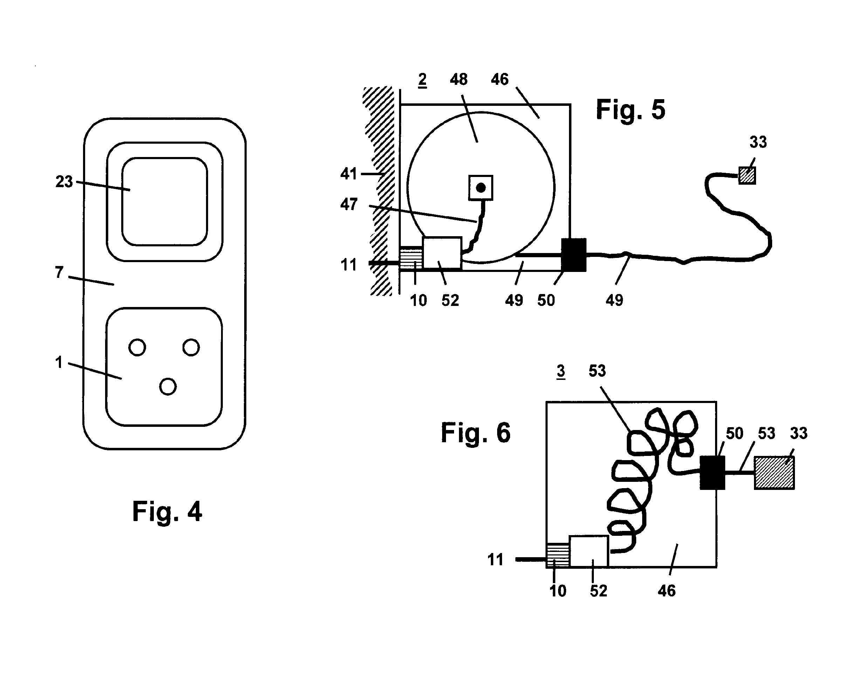

In Fig. 4 ist eine Sicht auf die Frontseite einer mit einer Anzeige-/Eingabeeinheit kombinierten Lade-Steckdose in Unterputz-Ausführung dargestellt. Es sind die Lade-Steckdose 1, die Anzeige-/Eingabeeinheit 23 und der Abdeckrahmen 7, hier ein Zweifach-Rahmen, zu erkennen. Die gezeigte Konfiguration ist lediglich ein Ausführungsbeispiel, denn selbstverständlich können die Lade-Steckdose 1 und die Anzeige-/Eingabeeinheit 23 auch an völlig verschiedenen Orten eines Gebäudes angeordnet und über den Installationsbus 18 oder über Powerline-Technik 29 eines Gebäudeautomationssystems miteinander verbunden sein, z. B. die Lade-Steckdose 1 in einer Garage oder in einem Carport und die Anzeige-/Eingabeeinheit 23 in der Diele oder im Wohnzimmer des Gebäudes.

In Fig. 5 ist eine alternative Ausführungsform zu den Figuren 1, 2 und 3 unter Verwendung einer eine Kabelaufwicklung aufweisenden Lade-Steckdose für Wand- oder Bodenbefestigung dargestellt. Die z. B. an der Wand 41 montierte Lade-Steckdose 2 besitzt im Innenraum ihres Gehäuses 46 eine automatische Kabelaufwicklung 48 mit einem darauf aufrollbaren respektive davon abrollbaren Lade-Kabel 49, welches über eine Kabel-Durchführung 50 aus dem Gehäuse 46 geführt wird und endseitig den zweiten Fahrzeug-Steckverbinder 33 (elektrischer Ausgangs-Anschluss) aufweist.

Die automatische Kabelaufwicklung 48 ist mit ihrem weiteren Ende über ein Kabel 47 mit einer Elektronik 52 verbunden, welche die Verbindung mit den Eingangs-Anschlussklemmen 10 und damit mit dem Anschlusskabel 11 herstellt. Unter der Elektronik 52 wird in diesem Zusammenhang
- das Schaltglied 12, der Busankoppler 14 respektive der Funk-Busankoppler 43 inklusive Antenne 44 und die Auswerte-Nerarbeitungseinheit 16 im Falle der Verwendung eines Installationsbusses 18
- das Schaltglied 12, der Netzankoppler 13 und die Auswerte-Nerarbeitungseinheit 16 im Falle der Verwendung der Powerline-Technik subsumiert.

In Fig. 6 ist eine alternative Ausführungsform zu den Figuren 1, 2 und 3 unter Verwendung einer ein Spiralkabel aufweisenden Lade-Steckdose für Wand- oder Bodenbefestigung dargestellt. Bei dieser Lade-Steckdose 3 wird die automatische Kabelaufwicklung 48 gemäß Fig. 5 durch ein Spiralkabel 53 ersetzt, welches sich im "Ruhezustand", bei welchem kein Fahrzeug geladen wird, innerhalb des Gehäuses 46 befindet und welches über die Kabel-Durchführung 50 aus dem Gehäuse 46 gezogen werden kann, um derart den Anschluss des zweiten Fahrzeug-Steckverbinders 33 (elektrischer Ausgangs-Anschluss) an der korrespondierenden Kupplung 35 des Fahrzeuges 34 zu ermöglichen. Das weitere Ende des als Lade-Kabel dienenden Spiralkabels 53 ist mit der Elektronik 52 verbunden, welche die Verbindung mit den Eingangs-Anschlussklemmen 10 und damit mit dem Anschlusskabel 11 herstellt.

Mit den vorstehend erläuterten Lade-Steckdosen 1, 2, 3 sind beispielsweise folgende Anwendungen unter Einbezug der Haus- und Gebäudesystemtechnik realisierbar:
- Der Aufladevorgang der Akkumulatoren des Fahrzeuges 34 wird über das Gebäudeautomationssystem gesteuert, indem die maximale Ladedauer und / oder eine definierte Zielzeit für den Ladeprozess mittels der Anzeige-/Eingabeeinheit 23 vom Anwender eingegeben / vorgegeben und durch entsprechende Ansteuerung des Schaltgliedes 12 über die Auswerte-Nerarbeitungseinheit 16 umgesetzt werden.
- Der Aufladevorgang der Akkumulatoren des Fahrzeuges 34 wird über das Gebäudeautomationssystem gesteuert, wozu aktuelle Tarif-Informationen (Stromkosten) über die Internet-Schnittstelle 21 abgerufen und gezielt dazu genutzt werden, den Aufladevorgang kostengünstig zu gestalten. Die abgerufenen Tarif-Informationen werden dazu genutzt, den Beginn und das Ende des Ladeprozesses festzulegen. Die Umsetzung erfolgt wiederum durch Ansteuerung des Schaltgliedes 12 über die Auswerte-/Verarbeitungseinheit 16. Die Tarif-Informationen können zusätzlich in der Anzeige-/Eingabeeinheit 23 angezeigt werden.
- Für die Optimierung, insbesondere kostengünstige Gestaltung des über den Fahrzeug-Rechner 36 respektive die vorstehend erwähnte Lade-Steuer-/Regelvorrichtung gesteuerten Aufladevorganges der Akkumulatoren des Fahrzeuges 34 werden dem Fahrzeug-Rechner respektive der Lade-Steuer-/Regelvorrichtung die über die Internet-Schnittstelle 21 des Gebäudeautomationssystems abgerufenen aktuellen Tarif-Informationen (Stromkosten) via Busankoppler respektive Netzankoppler, die Auswerte-/Verarbeitungseinheit 16 und das Lade-Kabel übermittelt. Die Tarif-Informationen können insbesondere dazu genutzt werden, über Beginn und Ende des Ladeprozesses zu entscheiden. Die Tarif-Informationen können zusätzlich in der Anzeige-/Eingabeeinheit 23 angezeigt werden.
- In Weiterführung der vorstehenden Möglichkeiten können die Informationen betreffend die maximale Ladedauer und / oder eine definierte Zielzeit für den Ladeprozess auch in geeigneter Kombination mit den abgerufenen Tarif-Informationen für eine kostengünstige Optimierung des Ladeprozesses genutzt und durch Ansteuerung des Schaltgliedes 12 über die Auswerte-/Verarbeitungseinheit 16 oder den Fahrzeug-Rechner respektive die Lade-Steuer-/Regelvorrichtung umgesetzt werden.
- Das Ende des Aufladeprozesses kann über die Anzeige-/Eingabeeinheit 23 oder über ein zentrales Controlpanel per Durchsage mitgeteilt werden.
- Es werden Mediendateien, z. B. MP3-Dateien, aus dem Zentralspeicher 20 des Gebäudeautomationssystems über den Installationsbus 18 respektive Powerline-Technik 29, den Busankoppler respektive den Netzankoppler, die Auswerte-/Verarbeitungseinheit 16 und das Lade-Kabel in den Fahrzeug-Rechner 36 bzw. in einen damit verbundenen separaten Speicher, z. B. einen Speicher einer Audio-Anlage des Fahrzeuges 34, übertragen.
- Es erfolgen automatische Updates der Firmware / Software im Fahrzeug 34 über die Internet-Schnittstelle 21, den Installationsbus 18 respektive Powerline-Technik 29 des Gebäudeautomationssystems, den Busankoppler respektive den Netzankoppler, die Auswerte-/Verarbeitungseinheit 16 und das Lade-Kabel. Bei allen in den vorstehenden Figuren erläuterten Lade-Steckdosen 1, 2, 3 ist auch eine vereinfachte Ausführungsform realisierbar, welche keine Auswerte-Nerarbeitungseinheit 16 und kein Schaltglied 12 aufweist. Bei einer derart vereinfachten Ausführungsform ist keine Daten-Kommunikation zwischen Lade-Steckdose und dem Fahrzeug möglich. Des Weiteren ist ein Abschalten der Lade-Steckdose über das Gebäudeautomationssystem nicht möglich.

### Bezugszeichenliste

- 1: Lade-Steckdose in Unterputz-Ausführung
- 2: Lade-Steckdose für Wand- oder Bodenbefestigung
- 3: Lade-Steckdose für Wand- oder Bodenbefestigung (mit Spiralkabel)
- 4: -
- 5: Steckdosen-Gerätesockel für den Anschluss des ersten Fahrzeug- Steckverbinders (elektrischer Ausgangs-Anschluss)
- 6: Zentralscheibe
- 7: Abdeckrahmen
- 8: Unterputzdose
- 9: -
- 10: Eingangs-Anschlussklemmen
- 11: Anschlusskabel
- 12: Schaltglied mit Steuereingang
- 13: Netzankoppler
- 14: Busankoppler
- 15: Kabel
- 16: Auswerte-/Verarbeitungseinheit
- 17: -
- 18: Installationsbus gemäß KNX-Standard
- 19: Zentralrechner
- 20: Zentralspeicher (Mediendateien)
- 21: Internet-Schnittstelle
- 22: -
- 23: Anzeige-/Eingabeeinheit
- 24: Busankoppler
- 25: Kabel
- 26: Funkeinheit
- 27: Antenne
- 28: -
- 29: Powerline-Technik gemäß KNX-Standard
- 30: Netzankoppler
- 31: erster Fahrzeug-Steckverbinder
- 32: Lade-Kabel
- 33: zweiter Fahrzeug-Steckverbinder (elektrischer Ausgangs-Anschluss)
- 34: Fahrzeug
- 35: elektrische Kupplung zur Aufnahme des Fahrzeug-Steckverbinders
- 36: Fahrzeug-Rechner
- 37: Kabel
- 38: -
- 39: -
- 40: -
- 41: Wand
- 42: -
- 43: Funk-Busankoppler
- 44: Antenne
- 45: -
- 46: Gehäuse
- 47: Kabel
- 48: automatische Kabelaufwicklung
- 49: Lade-Kabel
- 50: Kabel-Durchführung
- 51: -
- 52: Elektronik
- 53: Spiralkabel als Lade-Kabel

## Patentansprüche

1. Lade-Steckdose (1, 2, 3) zur Aufladung eines Elektroautos über ein zwischen Eingangs-Anschlussklemmen (10) der Lade-Steckdose und einer elektrischen Kupplung (35) des aufzuladenden Fahrzeugs (34) verlaufendes Lade-Kabel (32, 49, 53), mit Mitteln zur Einbindung der Lade-Steckdose in die Gebäudeautomation, wobei diese Mittel einen Busankoppler (14) bei Verwendung eines Installationsbusses (18) oder für den Zugang zu einer Informationstechnik (IT) Infrastruktur respektive einen Netzankoppler (13) bei Verwendung der Powerline-Technik (29) umfassen.

2. Lade-Steckdose (1, 2, 3) nach Anspruch 1, **gekennzeichnet durch** den Einsatz von Ethernet als kabelgebundene Datennetztechnik für ein lokales Datennetz.

3. Lade-Steckdose (1, 2, 3) nach Anspruch 1, **gekennzeichnet durch** einen Funk-Busankoppler (43) mit einer zugeordneten Antenne (44) für die drahtlose Kommunikation mit einer dem Installationsbus (18) zugeordneten Funkeinheit (26, 27).

4. Lade-Steckdose (1, 2, 3) nach Anspruch 3, **gekennzeichnet durch** einen WLAN Funk-Busankoppler (43).

5. Lade-Steckdose (1, 2, 3) nach Anspruch 1 oder 2, **dadurch gekennzeichnet, dass** eine Auswerte-/Verarbeitungseinheit (16) vorgesehen ist, welche zusammen mit einer dem Fahrzeug (34) zugeordneten Auswerte-/Verarbeitungseinheit eines Fahrzeug-Rechners (36) eine Daten-Kommunikation zwischen Lade-Steckdose (1, 2, 3) und Fahrzeug (34) durch Signalwandlung der kommunizierten Daten ermöglicht.

6. Lade-Steckdose (1, 2, 3) nach Anspruch 3, **dadurch gekennzeichnet, dass** die Auswerte-/Verarbeitungseinheit (16) mit dem Steuereingang eines zwischen den Eingangs-Anschlussklemmen (10) und einen elektrischen Ausgangs-Anschluss (5, 33) der Lade-Steckdose eingebundenen Schaltgliedes (12) verbunden ist.

7. Lade-Steckdose (1) nach einem der vorstehenden Ansprüche, **gekennzeichnet durch** einen Steckdosen-Gerätesockel (5) als elektrischer Ausgangs-Anschluss zum Einführen eines Steckverbinders (31) eines Ladekabels (32).

8. Lade-Steckdose (1) nach Anspruch 5, **gekennzeichnet durch** eine Unterputz-Ausführung der Lade-Steckdose (1).

9. Lade-Steckdose (2, 3) nach einem der Ansprüche 1 - 4, **gekennzeichnet durch** ein innerhalb des Gehäuses (46) der Lade-Steckdose (2, 3) befindliches und bedarfsweise aus dem Gehäuse herausziehbares Lade-Kabel (49, 53) inklusive endseitigem Steckverbinder (33) als elektrischer Ausgangs-Anschluss.

10. Lade-Steckdose (2) nach Anspruch 7, **gekennzeichnet durch** eine automatische Kabelaufwicklung (48) des Lade-Kabels (49).

11. Lade-Steckdose (3) nach Anspruch 7, **gekennzeichnet durch** ein Spiralkabel (53) als Lade-Kabel.
